# EUROPÄISCHE PATENTSCHRIFT

(11) **EP 2 249 678 B1**
(45) Veröffentlichungstag und Bekanntmachung des Hinweises auf die Patenterteilung: **12.12.2012**
(21) Anmeldenummer: 09706585.8
(22) Anmeldetag: 28.01.2009
(51) Int. Cl.: A45D 42/10

(54) **SANITÄRRAUMSPIEGEL**
RESTROOM MIRROR
MIROIR POUR ESPACES SANITAIRES

(30) Priorität: 28.01.2008 DE 202008001253 U
(43) Veröffentlichungstag der Anmeldung: 17.11.2010
(73) Patentinhaber: Mirror Image AG, 9323 Steinach (CH)
(72) Erfinder: RÖTTCHER, Oliver, 78269 Volkertshausen (DE)
(74) Vertreter: Behrmann, Niels
(86) Internationale Anmeldenummer: PCT/EP2009/000530
(87) Internationale Veröffentlichungsnummer: WO 2009/095214

(56) Entgegenhaltungen:
- WO-A-03/058402
- DE-U1- 20 320 117
- JP-A- 2003 111 654
- US-A1- 2008 123 266
- US-B1- 6 305 809

## Beschreibung

Die vorliegende Erfindung betrifft einen Sanitärraumspiegel nach dem Oberbegriff des Hauptanspruchs. Derartige Sanitärraumspiegel, etwa ausgebildet in Form eines Schmink- und/oder Rasierspiegels mit entsprechend konkaver Vergrößerungswirkung, sind aus dem Stand der Technik allgemein bekannt und gehören etwa zur Standardausstattung von Sanitärräumen wie Bädern von Hotels, findet sich zudem auch häufig im privaten Sanitärbereich.

Ferner wird als aus dem Stand der Technik bekannt vorausgesetzt ein einen gängigen Flachbildschirm, etwa in Form einer TFT-Bildschirmeinheit, aufweisendes Bildanzeigegerät, welches beispielsweise in Form von stationär, z.B. an einer Wand, befestigten, einen Flachbild-Fernsehbildschirm aufweisenden Gehäusen, digitale Bildmedienbetrachtung ermöglicht, wobei eine Bedienperson zum Erreichen einer günstigen Betrachtungsposition des Bildschirms eine einfache Verstellung des Gehäuses durch manuelle Betätigung bewirken kann.

Durch die zunehmende Verbreitung elektronischer Medien und zugehöriger Darstellungsgeräte, insbesondere von Flachbildschirmen zur Darstellung verschiedener audio-visueller Medien, ergibt sich der Bedarf nach entsprechend flexiblen, universellen Einsatzmöglichkeiten für derartige Medien-Darstellüngsgeräte. Gerade im Hotel- oder Gastronomiebereich betrifft dies auch Sanitär- oder Feuchtraumbereiche, welche bislang nur lückenhaft bzw. nicht mit Abspiel- bzw. Darstellungsgeräten für audiovisuelle elektronische Medien versehen sind (und, aufgrund der nicht unproblematischen Umgebungsbedingungen, insbesondere Feuchtigkeit, auch entsprechende Einrichtungsprobleme bringen). Entsprechend ist es daher zwar aus dem Stand der Technik bekannt, Bäder oder dergleichen Feuchträume mit Bildschirmen zur Darstellung audio-visueller Medien zu versehen, welche stationär in Schränken oder dergleichen eingebaut sind, dies erfordert jedoch, neben entsprechendem Aufwand beim Einbau, bereits Planung im Vorfeld und ermöglicht daher insbesondere keine einfache Nachrüstung bereits bestehender Objekte.

Aufgabe der vorliegenden Erfindung ist es daher, eine digitale Bildanzeige insbesondere auch potenziell problematischen Umgebungsbedingungen, wie sie etwa durch Feuchtigkeit oder Wasserdampf in Sanitärräumen regelmäßig vorhanden sind, zugänglich zu machen und darüber hinaus Geräte zu entwickeln, mit welchen auf einfache Art und Weise und mit geringem Aufwand auch bereits eingerichtete, bestehende Wohn-, Hotel- oder Sanitärumgebungen nachgerüstet werden können.

Die Aufgabe wird durch den Sanitärraumspiegel, zusätzlich genutzt als Bildanzeigegerät, mit den Merkmalen des Hauptanspruchs gelöst; vorteilhafte Weiterbildungen der Erfindung sind in den Unteransprüchen beschrieben.

So hat sich nämlich im Rahmen der Erfindung zunächst als vorteilhaft und synergistisch herausgestellt, dass sich ein gattungsgemäßer Sanitärraumspiegel, der häufig auch schon über eine elektrische Beleuchtung verfügt, ideal eignet, um in diesem Gehäuse zusätzlich einen Flachbildschirm aufzunehmen, wobei diese Anordnung konzeptuell und konstruktiv ideal an die problematischen Bedingungen, insbesondere die vorherrschende Feuchtigkeit in Sanitärräumen, angepasst ist.

In erfindungsgemäß vorteilhafter Weise wird nämlich das ohnehin bereits zur Aufnahme des Hohlspiegels benutzte Gehäuse einem weiteren, synergistischen Zweck zugeführt, nämlich an seiner weiteren (ersten) Flachseite einen Flachbildschirm vorzusehen. Erfindungsgemäß sind die Befestigungs- und Einstellmittel so ausgebildet, dass damit das Gehäuse durch einfache manuelle Betätigung von einer ersten Betrachtungsposition des Flachbildschirms (also z.B. zum Betrachten eines audio-visuellen Mediums) in die zweite Betrachtungsposition (zum Nutzen des Hohlspiegels durch eine Bedienperson) verbracht werden kann; auf diese Weise ist in einfacher und eleganter Weise nicht nur das Erweitern des Einsatzgebietes von Spiegelgehäusen möglich, auch ergibt sich synergistische Wirkung auf mehreren Ebenen: So kann etwa die typischerweise bereits vorhandene Speiseleitung zur Energie- und Signalzufuhr an einem ansonsten bekannten Fernseher benutzt werden, um zusätzlich den Spiegel zu be- oder zu hinterleuchten, in soweit ist keine weitere Verkabelung notwendig. Auch kann etwa ein in Sanitärbereichen ohnehin häufig vorhandener Spiegel in seiner Funktionalität durch die Möglichkeit der Bilddarstellung deutlich erweitert werden, ohne dass es etwa weiterer, gesonderter Installationen bedarf, damit ist dann auch die Nachrüstung bestehender Räume (z.B. Bäder) drastisch vereinfacht. Schließlich ist etwa vorstellbar, dass eine Bedienperson -- am Beispiel des Einsatzszenarios Bad -- während der Morgentoilette unter Nutzung ein und desselben Gerätes die Nachrichten sieht, anschließend mittels des Hohlspiegels eine Rasur oder einen Schminkvorgang durchführt und ggf. sogar in diesem Betriebszustand (der erfindungsgemäßen zweiten Betrachtungsposition) das Fernsehbild des Bildschirms durch einen weiteren, rückwärtigen festen Spiegel weiter betrachten kann.

Für die Ausrüster und Betreiber von Hotels oder dergleichen Eichrichtungen hält sich dabei der Installationsaufwand aus den oben beschriebenen Gründen in deutlichen Grenzen, und es steht deutlicher Mehrwert seitens der Benutzer zu erwarten.

Weiterbildungsgemäß ist es dabei einerseits vorteilhaft, den konkav nach innen gewölbten Spiegelbereich ganzflächig als zweite Flachseite des Gehäuses auszugestalten (z.B. mittels eines voll- oder teilverspiegelten Spiegeleinsatzes), alternativ und gemäß einer weiteren bevorzugten Ausführungsform ist es denkbar, den Hohlspiegelbereich lediglich teilflächig (partiell) auf bzw. an der zweiten Flachseite auszubilden und, bevorzugt den Hohlspiegelbereich umgebend, eine plane Spiegelfläche oder dergleichen Bereich auszubilden.

Besonders günstig ist es zudem, die zweite Flachseite und/oder die erste Flachseite (außerhalb des Flachbildschirms) mit Lichtquellen als Beleuchtungskörper zu versehen, entweder durch Einbetten derartiger Lichtquellen in jeweilige Flächen, oder aber durch Hinterleuchten entsprechender (teil-)lichtdurchlässiger Flächen oder Flächenbereiche. Für die zweite Flachseite, d.h. die Anordnung des Hohlspiegels, lässt sich damit in überaus günstiger Weise eine Beleuchtung der jeweils betrachteten Körperoberfläche erreichen, was z.B. das Rasieren vereinfacht (wobei der zusätzliche positive Effekt genutzt wird, dass, etwa zur Energieversorgung einer solchen Lichtquelle, die ohnehin bereits vorhandene Versorgungsleitung für den Flachbildschirm verwendet werden kann, ohne dass eine erneute, zusätzliche Verkabelung notwendig ist). Im Hinblick auf die erste Flachseite lässt sich derartiges zusätzliches Licht, ggf. geeignet gedimmt und/oder auf eine Farbe eingestellt, zur Herstellung besonderen Ambientes einsetzen, etwa zu dekorativen oder therapeutischen Zwecken.

Dabei ist es entweder bevorzugt, die Lichtquelle (bevorzugt separat) schaltbar zu gestalten, wobei dies sowohl durch konventionelle Schalter, einen Schaltflächenbereich auf der ersten und/oder zweiten Flachseite, oder aber über eine (etwa drahtlose) Fernbedienung erfolgen kann, ergänzend oder alternativ ist es günstig, die Ansteuerung einer derartigen Lichtquelle programmgesteuert vorzunehmen, wobei, etwa unter Berücksichtigung von Umgebungslicht, Tageszeit, aktuellem Einschaltzustand des Flachbildschirms oder anderer Parameter, automatisch eine geeignete Beleuchtung gewählt und programmgesteuert aktiviert werden kann.

Gemäß einer bevorzugten Ausführungsform ist es zudem günstig, den Flachbildschirm in Form eines (zumindest teilflächig) berührungssensitiven Bildschirms (Touch Screen) auszugestalten: Auf diese Weise wird zum einen der Vorteil erreicht, dass separate Einstell- oder Bedienelemente nicht notwendig sind, vielmehr geeignete Parameter, wie etwa Lautstärke, Programmwahl, Ein-/Ausschalten usw. durch einfaches Berühren entsprechend vorgesehener Schalt- oder Einstellflächen in ansonsten bekannter Weise auf der Bildschirmfläche bewirkt werden können. Der zusätzliche Vorteil liegt darin, dass eine derartige Bedienung ein aufwändiges Abdichten von ansonsten notwendigen Bedienelementen (etwa Knöpfen, Reglern oder dergleichen) unnötig macht, was sich insbesondere in feuchtigkeits- oder wasserdampfbelasteten Umgebungen wie Bädern positiv und vereinfachend auswirkt.

Die Signalversorgung des Flachbildschirms (bzw. einer zugehörigen Bildsignal-Empfangseinheit) kann in ansonsten bekannter Weise entweder drahtlos erfolgen, etwa dadurch, dass ein Fernsehtuner, eine Bluetooth-, WLAN- oder andere, bevorzugt standardisierte Funk- oder Infrarotanbindung an eine externe Bildsignalquelle vorgesehen ist. Alternativ kann diese Bildsignalquelle auch drahtgebunden angeschlossen werden, wobei, gemäß bevorzugter Weiterbildung, auch für eine solche Signalleitung dann eine gemeinsame Kabelverbindung mit ohnehin notwendiger elektrischer Netzversorgung geführt werden kann.

Während die vorliegende Erfindungsbeschreibung im Schwerpunkt auf die visuelle Darstellung der Bildschirmeinheit abstellt, gilt es als von der vorliegenden Erfindung mitumfasst, dass -- bevorzugt im Gehäuse selbst -- geeignete Audio-Ausgabeeinheiten vorgesehen sind, welche geeignet ein die Bilddarstellung begleitendes Audio-Signal (oder ein hiervon unabhängiges Audio-Signal) nach Außen (gehäuseextern) hörbar abstrahlen.

Gerade für die Nutzung der vorliegenden Erfindung im Zusammenhang mit Feuchträumen oder dergleichen wasser- oder wasserdampfbelasteten Räumen hat es sich als vorteilhaft erwiesen, das Gehäuse mittels geeigneter Dichtmittel so auszugestalten, dass dieses von derartigen Umwelteinflüssen unbelastet den Spiegel-, Bildschirmdarstellungs- und Beleuchtungsbetrieb ermöglicht. Damit liegt ein bevorzugter, jedoch nicht ausschließlicher Einsatzbereich der vorliegenden Erfindung im Zusammenhang mit derartigen Umgebungen, etwa Bädern, Duschen oder anderen Feuchträumen.

Im Ergebnis ermöglicht es die vorliegende Erfindung, in überraschend einfacher Weise ein äußerst flexibles, leicht einricht- und nachrüstbares Gerät zu schaffen, welches, zugeschnitten auf Benutzer im modernen Medienzeitalter, diesen Personen den Konsum audio-visueller Medien im Zusammenhang mit einer gerade im Sanitärbereich nützlichen Spiegelfunktion gestattet.

Weitere Vorteile, Merkmale und Einzelheiten der Erfindung ergeben sich aus der Beschreibung bevorzugter Ausführungsbeispiele sowie anhand der Zeichnungen; diese zeigen in:
- Figur 1: eine perspektivische Ansicht des Bildanzeigegeräts gemäß einer ersten, bevorzugten Ausführungsform der Erfindung;
- Figur 2: eine alternative Realisierung des Anzeigegeräts gemäß einer zweiten Ausführungsform;
- Figur 3: einen Längsschnitt durch eine dritte Ausführungsform der Erfindung und
- Figur 4: einen Längsschnitt analog Figur 3 durch eine vierte Ausführungsform der Erfindung.

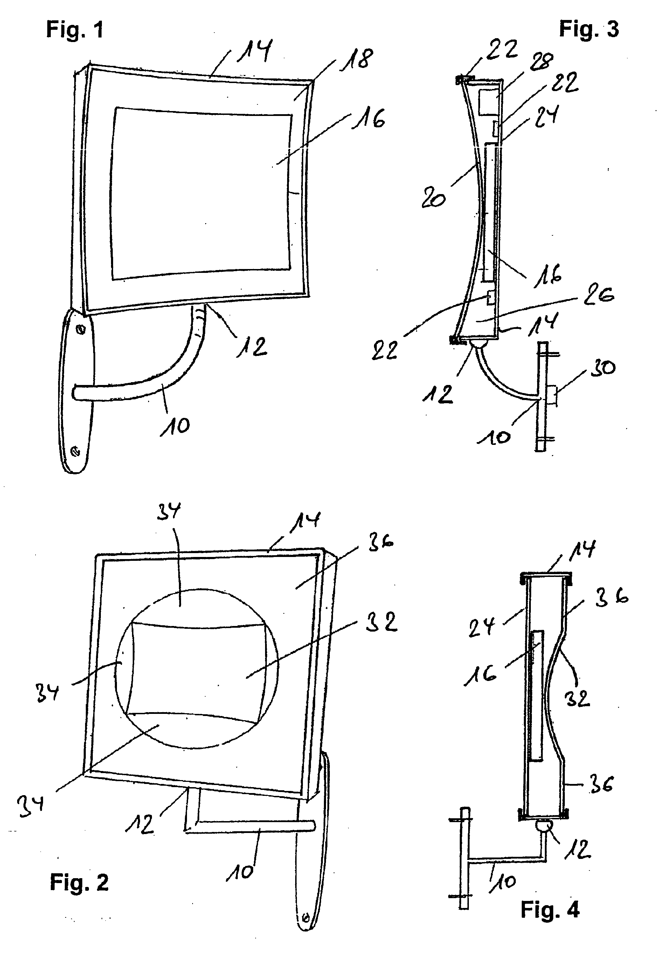

Bei den im Zusammenhang mit den Figuren 1 bis 4 zu erläuternden Ausführungsbeispielen bezeichnen dieselben Bezugszeichen identische bzw. funktionell äquivalente Baugruppen bzw. Funktionseinheiten.

Die Darstellung der Figur 1 verdeutlicht ein erstes Ausführungsbeispiel. Gezeigt ist, wie ein an einer Wand befestigter Halte- und Schwenkarm 10 an einem endseitigen Gelenk 12 ein Gehäuse 14 trägt, welches in der Darstellung der Figur 1 die erste Flachseite, nämlich die Seite eines den größten mittleren Bereich der Flachseite ausfüllenden Flachbildschirms 16 zeigt. Der Bildschirm 16 ist umgeben von einer Frontabdeckung 18 in Form einer Blende, welche im gezeigten Ausführungsbeispiel lichtdurchlässig mit einer (in der Figur nicht gezeigten) Lichtquelle hinterlegt ist. Die Frontabdeckung/ Blende 18 kann aus verschiedenem Material, vorzugsweise Glas, aber auch Spiegel, Metall, Plastik, etc. bestehen. Für den Bildschirm 16 ist eine transparente Fläche oder Öffnung vorgesehen.

Die Figur 3 verdeutlicht anhand eines äquivalenten, jedoch im Detail leicht abweichenden Ausführungsbeispiels den weiteren strukturellen Aufbau einer solchen Realisierungsform: rückwärtig dem Flachbildschirm 16 gegenüberliegend ist ein Hohlspiegeleinsatz 20 mit Hilfe von Haltewinkeln (schematisch gezeigt) 22 am Gehäuse 14 festgelegt; im gezeigten Ausführungsbeispiel ist das Spiegelelement 20 vollflächig über die gesamte zugehörige (zweite) Flachseite des Gehäuses 16 ausgebildet und als Hohlspiegel verspiegelt. Allerdings besitzt der Hohlspiegel im Bereich von im Gehäuseinneren ansitzenden Lichtquellen 22 Lichtdurchlässe, sodass das sich im Spiegel 20 spiegelnde Gesicht des Benutzers eine Beleuchtung erfährt. Im gezeigten Ausführungsbeispiel ist auch die den Bildschirm 16 abdeckende Frontwand 24 transparent ausgestaltet, sodass die Lichtquellen 22 auch durch diese Flachseite (erste Flachseite) hindurchscheinen und in soweit eine randseitige Beleuchtung des Displays 16 ausbilden. Gezeigt ist ferner, wie im feuchtigkeitsdichten Gehäuseinnenraum 26 eine schematisch gezeigte Lautsprechereinheit 28 so befestigt ist, dass diese ein begleitendes Audio-Signal des auf der Bildschirmeinheit 16 abgespielten Bildes (alternativ auch andere, eigenständige Audio-Medien) wiedergeben kann. Durch geeignete Kopplung mit dem Gehäuse wird in feuchtigkeitsdichter Weise der Klang zum Betrachter bzw. Zuhörer nach außen übertragen. Die Schnittansicht der Figur 3 verdeutlicht ferner, wie mittels eines einzelnen, zentralen Anschlusses 30 (dies ist sowohl aus konstruktiven, als auch aus Dichtigkeitsgründen, etwa im Hinblick auf den Einsatz in Feuchträumen, günstig) sowohl die elektrische Spannungsversorgung für Bildschirmeinheit 16 und Lichtquellen 22 zugeführt werden kann, als auch das Bild- bzw. Audio-Signal zum Darstellen und Wiedergeben durch die Einheiten 16 bzw. 28. In soweit eignet sich die modulare Einheit im Ausführungsbeispiel der Figur 3 (analog der Figur 1) ideal zum Nachrüsten in verschiedenen Einsatzumgebungen, eingeschlossen Feuchtumgebungen wie Bäder oder dergleichen, wo etwa die gezeigten Anordnungen in der Art und Bauform bzw. Baugröße von Rasier- bzw. Schminkspiegeln geeignet im Zusammenhang mit Waschbecken, Beckenrändern von Badewannen oder dergleichen montiert werden können.

Die Figur 2 verdeutlicht eine weitere Ausführungsform, der Blickwinkel erfolgt hier von der zweiten Flachseite, d.h. der Seite des Hohlspiegels. Zu erkennen ist ein zentraler Hohlspiegel-Vergrößerungsbereich 32, der von vier hinterleuchteten Lichtsegmenten 34 umgeben ist (wobei die Flächenbereiche 34 abschnittsweise transparent und, analog der Figur 3, mit einer Lichtquelle geeignet hinterleuchtet sind). Vervollständigt wird die gezeigte Flachseite von einer umgebenden Abdeckung 36 im Gehäuserahmen 14, welche z.B. plan verspiegelt sein kann.

Die Lichtbereiche 34 können auch mit alternativen Beleuchtungsformen realisiert sein, z.B. durch Leuchtfolien, LEDs, indirekte Beleuchtung usw.

Schließlich verdeutlicht die Schnittansicht der Figur 4, ansonsten analog auszugestalten bzw. einzurichten wie die vorbeschriebenen Ausführungsbeispiele, wie ein Hohlspiegelbereich 32 der in Figur 2 gezeigten Art im Längsschnitt zentrisch konkav mit einer Innenwölbung ausgeformt, im Randbereich 36 einen planen Abschnitt (z.B. verspiegelt) aufweist. Im rückseitigen Bereich ist wiederum eine (transparente) Wand 24 vorgesehen, welche (für Betrachtung durchlässig) die Beobachtung des auf dem Display 16 gezeigten audio-visuellen Mediums ermöglicht (auch hier ist in geeigneter Weise eine -- nicht gezeigte-- Audio-Ausgabeeinheit vorgesehen, ebenso wie zusätzliche Lichtquellen, partiell durchscheinend durch eine oder beide Flachseiten, vorgesehen sein können).

Die Figur 4 (genauso wie auch die Figur 3) lassen zudem in günstiger Weise erkennen, wie zum Erreichen eines möglichst kompakten Gehäuses die Gehäusetiefe praktisch von der Innenwölbung des Hohlspiegelbereichs 20 bzw. 32 sowie der Flachbildschirmeinheit 16 bestimmt wird; je nach Wärmeentwicklung sind zudem im Rahmen der Erfindung geeignete Luftzirkulationsabstände vorzusehen.

Wie die Figuren verdeutlichen, ist es zudem in einfacher Weise möglich, die Gehäuseeinheit 14 so zu verschwenken, dass entweder der Betrachter freien Blick auf den Bildschirm 16 hat, oder aber ihm der Hohlspiegelbereich (20 bzw. 32) gegenübersteht. Auch ermöglicht es das exemplarisch gezeigte (einzige die Verbindung zum Gehäuse herstellende) Gelenk 12, die Gehäuseeinheit geeignet in ihrer Drehstellung, Neigung usw. zu justieren. Mechanisch ist dies einfach, darüber hinaus vermindert sich der Dichtungsaufwand im Hinblick auf die Einsatzumgebung, und es können alle Zuleitungen -- Versorgungs- und Signalleitungen für die im Gehäuse aufgenommenen Aggregate -- durch dieses einzelne Gelenk geführt werden. Zur weiteren Flexibilisierung der Verstellbarkeit sind andere Gelenkkonfigurationen denkbar, so kann der Schwenkarm 10 mit weiteren Gelenken 12 versehen sein, um front- und rückseitiges sowie seitliches Neigen zu ermöglichen.

Die Verstellung des Schwenkarms 10 kann durch manuelle Betätigung und/oder durch ferngesteuerte Betätigung, z.B. durch Bedienung mittels Fernbedienung oder Touchsensor erfolgen. Bei ferngesteuerter Bedienung ist im Gehäuseinneren 26 eine entsprechende motorische Antriebsvorrichtung (nicht gezeigt) berücksichtigt.

Im Rahmen der Erfindung ist es zudem vorgesehen, einen Zugriff so auf die Bildschirmeinheit 16 (welche in ansonsten bekannter Weise ein TFT-Modul sein kann, welches mit gängigen Bild- bzw. Videonormen, etwa TV/Video, DVD-Formaten, Web-Formaten, eingeschlossen Web-Video usw. angesteuert sein kann) so vorzusehen, dass mittels einer Berührungs-Funktionalität (Touch-Screen) in Form von nicht näher gezeigten berührungssensitiven Oberflächen auf dem Bildschirm Einstellungen vorgenommen werden können, etwa Helligkeits- und Lautstärkeeinstellungen, Programmauswahl, Aktivierung der zusätzlichen Lichtquellen u.v.m.

Von der Erfindung ist es zudem umfasst, die gezeigte Einheit von einer (nicht gezeigten) Fernsteuerung, bevorzugt drahtlos und in üblicher Weise über Infrarot, Bluetooth, andere Funkprotokolle usw. anzusteuern, sodass auch oder alternativ zum Touch-Screen eine Bedienung erfolgen kann. Weiterbildungsgemäß erscheint es gar möglich, die gezeigte Einheit als Wiedergabeeinheit für einen Internetzugang oder dergleichen zu konfigurieren, wobei dann entsprechend die dem Bildschirm 16 zugeordnete Steuereinheit (etwa gehäuseintern, alternativ auch außerhalb des Gehäuses vorgesehen) entsprechende Computer- bzw. Zugriffs- und Datenaufbereitungsfunktionalität besitzt.

Denkbar ist es ferner, die Einheit auch durch (ansonsten bekannte) Hausautomations- bzw. Bussysteme anzusteuern, welche auch weitere objektbezogene Parameter einstellen, z.B. Leuchtenaktivierung oder dergleichen.

Auch liegt es im Rahmen der vorliegenden Erfindung, alle, lediglich exemplarisch in den Figuren und in der weitergehenden Beschreibung gezeigten Merkmale beliebig zu kombinieren, sodass im Ergebnis in außerordentlich flexibler Weise eine universelle, leicht zu montierende und nachzurüstende, dabei ausgesprochen bedienungsfreundliche Einheit entsteht, die zudem durch ihren Feuchtigkeits-, Wasserdampf- und Spritzschutz sich ideal eignet, auch in Bädern oder dergleichen Sanitäreinrichtungen eingesetzt zu werden.

## Patentansprüche

1. Sanitärraumspiegel mit
einem Gehäuse, das auf einer einer ersten Flachseite gegenüberliegenden zweiten Flachseite einen eine optische Hohlspiegelwirkung anbietenden Spiegelbereich (20, 32) aufweist, wobei dem Gehäuse Befestigungs- und Einstellmittel (10, 12) so zugeordnet sind, dass das Gehäuse an einer Horizontal- oder Vertikalfläche festlegbar ist und durch manuelle und/oder motorische Betätigung gedreht, verschwenkt und/oder gekippt werden kann,
**gekennzeichnet durch**
einen an der ersten Flachseite im Gehäuseinneren vorgesehenen Flachbildschirm (16), der zum Anzeigen elektronischer Bildsignale ausgebildet ist,
wobei das spritzwasser- und/oder wasserdampfgeschützt und/oder feuchtraumtauglich abgedichtete Gehäuse **durch** die Betätigung von einer ersten Betrachtungsposition des Flachbildschirms in eine zweite Betrachtungsposition des Spiegelbereiches bewegt werden kann
und die Befestigungsmittel ein das Drehen, Verschwenken bzw. Kippen ermöglichendes Gelenk (12) aufweisen, **durch** das als zentraler Anschluss eine Verkabelung für die im Gehäuse vorgesehenen elektrischen Aggregate geführt ist.

2. Sanitärraumspiegel nach Anspruch 1, **dadurch gekennzeichnet, dass** das Gelenk ein einzelnes Gelenk ist.

3. Sanitärraumspiegel nach Anspruch 1 oder 2, **dadurch gekennzeichnet, dass** das Gehäuse ein Flachgehäuse ist, dessen Gehäusetiefe zwischen der ersten und der zweiten Flachseite von einer effektiven Tiefe des im Gehäuse aufgenommenen Flachbildschirms sowie des Spiegelbereichs bestimmt ist.

4. Sanitärraumspiegel nach einem der Ansprüche 1 bis 3, **dadurch gekennzeichnet, dass** der Spiegelbereich durch einen an der zweiten Flachseite vorgesehenen Spiegeleinsatz (20) realisiert ist, der ganzflächig oder teilflächig, insbesondere im Bereich der Flächenmitte, eine die Hohlspiegelwirkung anbietende, nach innen gewölbte Spiegeloberfläche ausbildet.

5. Sanitärraumspiegel nach Anspruch 4, **dadurch gekennzeichnet, dass** der Spiegeleinsatz randseitig, insbesondere den Bereich der Flächenmitte umgebend, eine plane Spiegelfläche (36) ausbildet.

6. Sanitärraumspiegel nach Anspruch 4 oder 5, **dadurch gekennzeichnet, dass** das Gehäuse eine spritzwasser- und/oder wasserdampfgeschützt und/oder feuchtraumtauglich abgedichtete Anordnung aus dem Spiegeleinsatz, einer die erste Flachseite ausbildenden Frontwand (24) sowie einem den Siegeleinsatz sowie die Frontwand randseitig umschließenden Gehäuserahmen ist.

7. Sanitärraumspiegel nach einem der Ansprüche 1 bis 6, **dadurch gekennzeichnet, dass** in der zweiten Flachseite, insbesondere den Spiegelbereich umgebend und/oder diesem benachbart, eine Lichtquelle und/oder ein durch eine Lichtquelle im Gehäuse hinterleuchteter, lichtdurchlässiger Flächenbereich (34) vorgesehen ist.

8. Sanitärraumspiegel nach einem der Ansprüche 1 bis 7, **gekennzeichnet durch** eine im Gehäuse vorgesehene Lichtquelle (22), die zumindest bei Aktivierung **durch** die erste und/oder zweite Flachseite sichtbar ist.

9. Sanitärraumspiegel nach Anspruch 7 oder 8, **dadurch gekennzeichnet, dass** die Lichtquelle über ein Bedienelement, insbesondere den Flachbildschirm, oder programmgesteuert schaltbar und/oder in ihrer Helligkeit und/oder Farbwirkung einstellbar ausgebildet ist.

10. Sanitärraumspiegel nach einem der Ansprüche 1 bis 9, **dadurch gekennzeichnet, dass** der Spiegelbereich durch ein zumindest teilflächig halbdurchlässiges Spiegelelement realisiert ist.

11. Sanitärraumspiegel nach einem der Ansprüche 1 bis 10, **dadurch gekennzeichnet, dass** der Flachbildschirm ein auf der ersten Flachseite für manuelle Betätigung zugänglicher, zumindest teilflächig berührungsempfindlicher Bildschirm (16) ist, der zum Ausführen oder Einrichten von Bilddarstellungs- und/oder Programmparametern des Bildschirms und/oder von Parametern einer im Gehäuse aufgenommenen, extern durch die erste und/oder zweite Flachseite sichtbaren Lichtquelle (22) eingerichtet ist.

12. Sanitärraumspiegel nach einem der Ansprüche 1 bis 11, **dadurch gekennzeichnet, dass** dem Flachbildschirm eine elektronische Bildsignal-Empfangseinheit zugeordnet ist, die drahtlos oder drahtgebunden mit einer externen elektronischen Bildsignalquelle verbunden ist.

13. Sanitärraumspiegel nach einem der Ansprüche 1 bis 12, **gekennzeichnet durch** eine drahtlos mit einer im Gehäuse vorgesehenen Steuereinheit zusammenwirkende Fernsteuereinheit, welche zum Ausführen oder Einrichten von Bilddarstellungs- und/oder Programmparametern des Bildschirms und/oder von Parametern einer im Gehäuse aufgenommenen, extern **durch** die erste und/oder zweite Flachseite sichtbaren Lichtquelle eingerichtet ist.

14. Sanitärraumspiegel nach einem der Ansprüche 1 bis 13, **dadurch gekennzeichnet, dass** das Gehäuse und/oder der Spiegelbereich zum Ausbilden eines verstellbaren Schmink- oder Rasier-Hohlspiegels bemessen ist.

## Claims

1. Bathroom mirror comprising a housing having a mirror region (20. 32) providing an optical concave mirror effect on a second flat side opposite a first flat side, fastening and adjusting means (10, 12) being assigned to the housing such that the housing can be fixed to a horizontal or vertical surface and can be rotated, pivoted and/or tilted by manual and/or mechanical operation, **characterised by** a flat screen (16) provided on the first flat side inside the housing, which screen is designed to display electronic image signals, the housing, which is sealed for spray water and/or water vapour resistance and/or suitability for a damp location, being able to be moved from a first observation position of the flat screen into a second observation position of the mirror region by means of said operation, and the fastening means having an articulation (12) which facilitates the rotating, pivoting or tilting and through which a cable is guided as the central connection for the electrical system provided in the housing.

2. Bathroom mirror according to claim 1, **characterised in that** the articulation is a single articulation.

3. Bathroom mirror according to either claim 1 or claim 2, **characterised in that** the housing is a flat housing, the housing depth of which between the first and second flat side is determined by an effective depth of the flat screen accommodated in the housing and of the mirror region.

4. Bathroom mirror according to any of claims 1 to 3, **characterised in that** the mirror region is produced by a mirror insert (20) which is provided on the second flat side and forms, over the entire surface or over a portion thereof, in particular in the region of the surface centre, an inwardly curved mirror surface providing the concave mirror effect.

5. Bathroom mirror according to claim 4, **characterised in that** the mirror insert is shaped as a plane mirror region (36) at the edges, in particular in the region surrounding the surface centre.

6. Bathroom mirror according to either claim 4 or claim 5, **characterised in that** the housing is an arrangement which is sealed for spray water and/or water vapour resistance and/or suitability for a damp location and consists of the mirror insert, a front wall (24) forming the first flat side and a housing frame enclosing the mirror insert and the front wall at the edges.

7. Bathroom mirror according to any of claims 1 to 6, **characterised in that** in the second flat side, in particular surrounding the mirror region and/or adjacent thereto, a light source and/or a translucent surface region (34) which is backlit by a light source in the housing is provided.

8. Bathroom mirror according to any of claims 1 to 7, **characterised by** a light source (22) provided in the housing, which light source, when activated, is visible at least through the first and/or second flat side.

9. Bathroom mirror according to either claim 7 or claim 8, **characterised in that** the light source is controllable via an operating element, in particular the flat screen, or by program control, and/or the brightness and/or colour effect thereof can be adjusted.

10. Bathroom mirror according to any of claims 1 to 9, **characterised in that** the mirror region is produced by a mirror element which is semi-permeable, at least over a portion of the surface.

11. Bathroom mirror according to any of claims 1 to 10, **characterised in that** the flat screen is a screen (16) accessible for manual operation on the first flat side and touch-sensitive, at least over a portion of the surface, which screen is equipped to execute or set up image display and/or programme parameters of the screen and/or parameters of a light source (22) accommodated in the housing and visible externally through the first and/or second flat side.

12. Bathroom mirror according to any of claims 1 to 11, **characterised in that** an electronic image signal reception unit is assigned to the flat screen and is connected to an external electronic image signal source via a wireless or wired link.

13. Bathroom mirror according to any of claims 1 to 12, **characterised by** a remote control unit cooperating with a control unit provided in the housing via a wireless link, said remote control unit being equipped to execute or set up image display and/or programme parameters of the screen and/or parameters of a light source accommodated in the housing and visible externally through the first and/or second flat side.

14. Bathroom mirror according to any of claims 1 to 13, **characterised in that** the housing and/or the mirror region is dimensioned such that it forms an adjustable concave make-up or shaving mirror.

## Revendications

1. Miroir pour espaces sanitaires avec un carter comportant sur une deuxième face plate opposée à une première face plate, un espace miroir (20, 32) offrant un effet optique de miroir concave, des moyens de fixation et de réglage (10, 12) étant dédiés au carter de telle sorte que le carter puisse être fixé à une surface horizontale ou verticale et qu'il puisse être tourné, pivoté et/ou basculé par une manoeuvre manuelle et/ou motorisée, **caractérisé par** un écran plat de visualisation (16) prévu sur la première face plate à l'intérieur du carter, conçu pour la visualisation de signaux d'images électroniques, le carter étanche aux éclaboussures d'eau et/ou à la vapeur d'eau et/ou apte à une pièce humide pouvant être bougé d'une première position d'examen de l'écran plat de visualisation à une deuxième position d'examen de l'espace miroir et les moyens de fixation comportant une articulation (12) permettant de le tourner, de le pivoter respectivement de le basculer, à travers laquelle est acheminé un câblage servant de branchement central à l'unité électrique prévue dans le carter.

2. Miroir pour espaces sanitaires selon la revendication 1, **caractérisé en ce que** l'articulation est une articulation unique.

3. Miroir pour espaces sanitaires selon la revendication 1 ou 2, **caractérisé en ce que** le carter est un carter plat dont la profondeur de carter entre la première et la deuxième face plate a une profondeur effective déterminée par l'écran plat de visualisation ainsi que par l'espace miroir intégrés dans le carter.

4. Miroir pour espaces sanitaires selon une des revendications 1 à 3, **caractérisé en ce que** l'espace miroir est réalisé par l'insertion d'un miroir (20) prévu dans la deuxième face plate, qui forme sur la surface totale ou sur une surface partielle, notamment dans l'espace central de la surface, une surface de miroir bombée vers l'intérieur offrant un effet de miroir concave.

5. Miroir pour espaces sanitaires selon la revendication 4, **caractérisé en ce que** l'insertion du miroir forme sur les côtés périphériques, notamment autour de l'espace central de la surface, une surface de miroir plan (36).

6. Miroir pour espaces sanitaires selon la revendication 4 ou 5, **caractérisé en ce que** le carter constitue un agencement étanche aux éclaboussures d'eau et/ou à la vapeur d'eau et/ou apte à une pièce humide constitué de l'insertion du miroir, une paroi frontale (24) formant la première face plate ainsi que d'un encadrement du carter entourant du côté périphérique l'insertion du miroir ainsi que la paroi frontale.

7. Miroir pour espaces sanitaires selon une des revendications 1 à 6, **caractérisé en ce que** dans la deuxième face plate, notamment dans l'espace entourant le miroir et/ou voisin de celui-ci, il est prévu une source lumineuse et/ou une surface (34) transparente à la lumière éclairée par l'arrière par une source lumineuse dans le carter.

8. Miroir pour espaces sanitaires selon une des revendications 1 à 7, **caractérisé par** une source lumineuse (22) prévue dans le carter, visible au moins par activation à travers la première et/ou deuxième face plate.

9. Miroir pour espaces sanitaires selon la revendication 7 ou 8, **caractérisé en ce que** la source lumineuse est conçue pour être commutable par l'intermédiaire d'un élément de commande, notamment l'écran plat de visualisation, ou sous contrôle de programme, et/ou pour être réglable en ce qui concerne la luminosité et/ou la couleur.

10. Miroir pour espaces sanitaires selon une des revendications 1 à 9, **caractérisé en ce que** l'espace miroir est réalisé par un élément semi-transparent sur au moins une partie de la surface.

11. Miroir pour espaces sanitaires selon une des revendications 1 à 10, **caractérisé en ce que** l'écran plat de visualisation est un écran de visualisation (16) sensitif sur au moins une partie de la surface accessible sur la première face plate pour une commande manuelle, installé pour l'exécution ou le réglage de représentations d'images et/ou de paramètres de programme de l'écran de visualisation et/ou de paramètres d'une source lumineuse (22) intégrée dans le carter et visible de l'extérieur à travers la première et/ou la deuxième face plate.

12. Miroir pour espaces sanitaires selon une des revendications 1 à 11, **caractérisé en ce que** l'écran plat de visualisation est affecté à une unité électronique de réception de signaux d'images, reliée sans fils ou par fils à une source de signaux d'images externe.

13. Miroir pour espaces sanitaires selon une des revendications 1 à 12, **caractérisé par** une unité de télécommande fonctionnant sans fils de concert avec une unité de commande prévue dans le carter, qui est installée pour l'exécution ou le réglage de représentations d'images et/ou de paramètres de programme de l'écran de visualisation et/ou de paramètres d'une source lumineuse intégrée dans le carter et visible de l'extérieur à travers la première et/ou la deuxième face plate.

14. Miroir pour espaces sanitaires selon une des revendications 1 à 13, **caractérisé en ce que** le carter et/ou l'espace miroir est dimensionné pour la représentation d'un miroir concave réglable pour se maquiller ou pour se raser.
